# EUROPEAN PATENT APPLICATION

(11) **EP 3 075 586 A1**
(43) Date of publication of application: **05.10.2016**
(21) Application number: 16161802.0
(22) Date of filing: 23.03.2016
(51) Int. Cl.: B60J 10/21, B60J 10/82

(54) **WEATHER STRIP OF SUNROOF DEVICE**

(30) Priority: 31.03.2015 JP 2015070730
(71) Applicant: AISIN SEIKI KABUSHIKI KAISHA, Kariya-shi, Aichi-ken, 448-8650 (JP)
(72) Inventor: SAWADA, Kazuki, KARIYA-SHI, AICHI-KEN, 448-8650 (JP)
(74) Representative: Intès, Didier Gérard André

(57) **Abstract**

A weather strip (20) of a sunroof device includes: an attachment portion (25) which extends over the entire circumference along a circumferential edge portion of an opening (11) formed in a roof (10) of a vehicle, is made of a solid material, and is mounted on the roof in a state of being engaged with the roof; a sealing portion (26, 43, 51) made of a sponge material, which protrudes toward the opening from the attachment portion, liquid-tightly comes into contact with an opening end edge (11a) of the opening, protrudes from the attachment portion toward a roof panel (12, 13) that closes the opening, and liquid-tightly comes into contact with a panel end edge (12a, 13a) of the roof panel; and a die molding portion (29, 53) which is disposed in a corner portion (22) and is made of the sponge material.

## Description

### TECHNICAL FIELD

This disclosure relates to a weather strip of a sunroof device.

### BACKGROUND DISCUSSION

In the related art, a weather strip of a sunroof device described in JP 2014-141151A (Reference 1) is known. The weather strip of a sunroof device is formed in a substantially rectangular annular shape which extends along a circumferential edge portion of an opening formed in a roof of a vehicle, and is loaded on the roof along the circumferential edge portion.

The weather strip includes one pair of side weather strips which respectively extend in a forward-and-rearward direction along edge portions of the opening on both sides in a width direction of the vehicle, and one pair of front and rear weather strips which respectively extend in the width direction of the vehicle, and connect front ends and rear ends of the one pair of side weather strips to each other via a corner portion of die molding.

The side weather strip has an attachment portion having a substantially U-shaped sectional surface to which a longitudinal wall that stands on the roof along a boundary portion of the opening and a roof panel which closes the opening is inserted, and which opens downward. In addition, the side weather strip has a sealing portion which liquid-tightly comes into contact with a flange-shaped opening end edge which extends downward being bent toward the opening from the attachment portion, and which liquid-tightly comes into contact with a flange-shaped panel end edge which is bent toward the roof panel from the attachment portion and extends downward. In addition, the side weather strip is generally made of an extruded material, such as synthetic rubber (EPDM or the like) or thermoplastic elastomer, and the attachment portion and the sealing portion are respectively made of a solid material and a sponge material.

The front and rear weather strips are also made of an extruded material, such as synthetic rubber (EPDM or the like) or thermoplastic elastomer, and also include the attachment portion and the sealing portion which are similar to those in the side weather strip.

Meanwhile, the corner portion is formed to maintain continuity with the sealing portion so that a sealing function is not stopped between the side weather strips and the front and rear weather strips, and the entire corner portion is generally formed by die molding by a sponge material, such as synthetic rubber (EPDM or the like) or thermoplastic elastomer.

However, in JP 2014-141151 A (Reference 1), when the weather strip is loaded on the roof, since the entire corner portion is made of the sponge material, it becomes difficult to fix the corner portion to the roof by inserting the longitudinal wall, and thus, a double-sided tape or the like is necessary, and it is forced to increase the number of assembling man-hours.

### SUMMARY

Thus, a need exists for a weather strip of a sunroof device which can further reduce the number of assembling man-hours.

A weather strip of a sunroof device according to an aspect of this disclosure includes: an attachment portion which extends over the entire circumference along a circumferential edge portion of an opening formed in a roof of a vehicle, and is made of a solid material which is mounted on the roof in a state of being engaged with the roof; a sealing portion made of a sponge material, which protrudes toward the opening from the attachment portion, liquid-tightly comes into contact with an opening end edge of the opening, protrudes from the attachment portion toward a roof panel that closes the opening, and liquid-tightly comes into contact with a panel end edge of the roof panel; and a die molding portion which is disposed in a corner portion and is made of the sponge material.

According to this configuration, it is possible to mount the attachment portion made of the solid material of the extruded material, to the roof across the entire circumference along the circumferential edge portion of the opening in a state of being constantly engaged with the roof, and to further reduce the number of assembling man-hours.

In the weather strip of a sunroof device according to the aspect of this disclosure, it is preferable that the sealing portion comprises an outer sealing portion, which liquid-tightly comes into contact with the opening end edge and is connected to the attachment portion so that one end of said outer sealing portion is a free end, and that the die molding portion includes a first rib connecting the outer sealing portion and the attachment portion.

According to this configuration, even when the outer sealing portion which is positioned further outside than the attachment portion in the corner portion is pulled along the corner portion, since the outer sealing portion is reinforced by the rib, it is possible to further stabilize the posture, and to prevent deterioration of sealing performance between the outer sealing portion and the opening end edge.

In the weather strip of a sunroof device according to the aspect of this disclosure, it is preferable that the sealing portion comprises an inner sealing portion that liquid-tightly comes into contact with the panel end edge, and that the die molding portion includes a second rib connecting the inner sealing portion and the attachment portion.

According to this configuration, even when the inner sealing portion which is positioned further inside than the attachment portion in the corner portion is compressed along the corner portion, since the inner sealing portion is reinforced by the second rib, it is possible to prevent the generation of wrinkles.

In the weather strip of a sunroof device according to the aspect of this disclosure, it is preferable that a cut portion is formed at least at a part in the corner portion in the sealing portion, and the die molding portion has a filling portion which covers the cut portion.

According to this configuration, since the cut portion is formed at least at a part in the corner portion in the sealing portion, it is possible to further improve followability of the sealing portion in the corner portion. Meanwhile, since the filling portion covers the cut portion in accordance with the corner portion, it is possible to appropriately maintain the sealing performance in the corner portion.

In the weather strip of a sunroof device according to the aspect of this disclosure, it is preferable that the sealing portion forms a design surface, and at least one of an outer contact surface that is in contact with the opening end edge linked to the design surface and an inner contact surface that is in contact with the panel end edge, in the corner portion.

According to this configuration, since the sealing portion forms the design surface, and the outer contact surface or the inner contact surface to be continuous with each other, it is possible to prevent deterioration of sealing performance between the sealing portion and the opening end edge or the panel end edge in the boundary portion between the sealing portion and the filling portion.

In the weather strip of a sunroof device according to the aspect of this disclosure, it is preferable that the sealing portion comprises an outer sealing portion which liquid-tightly comes into contact with the opening end edge and an inner sealing portion which liquid-tightly comes into contact with the panel end edge, and that the die molding portion includes a rib which connects at least one of the filling portion, the outer sealing portion and the inner sealing portion, to the attachment portion.

According to this configuration, when the filling portion and the attachment portion are connected to each other by the rib, since the posture of the filling portion is further stabilized, it is possible to more appropriately maintain the sealing performance in the corner portion.

In the weather strip of a sunroof device according to the aspect of this disclosure, it is preferable that both ends of the inner sealing portion are connected to the attachment portion so as to form a space between the inner sealing portion and the attachment portion, the cut portion is formed in the inner sealing portion, the rib connects at least the filling portion and the attachment portion to each other, and in the corner portion, a through hole is formed in a synthetic inner sealing portion which is formed in collaboration with a remaining non-cut portion of the inner sealing portion and the filling portion.

According to this configuration, when performing die molding with respect to the filling portion or the rib, since it is possible to insert and remove the mold by using the through hole, it is possible to further improve workability.

In the weather strip of a sunroof device according to the aspect of this disclosure, it is preferable that, the sealing portion comprises an inner sealing portion which liquid-tightly comes into contact with the panel end edge and is connected to the attachment portion so that one end of said inner sealing portion is a free end, and the die molding portion includes a second rib connecting the inner sealing portion and the attachment portion.

This disclosure has an effect of being capable of further reducing the number of manufacturing man-hours.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a perspective view illustrating a roof in which a first embodiment of a weather strip of a sunroof device is employed;
Fig. 2 is a plan view illustrating a structure of the weather strip of a sunroof device of the embodiment;
Figs. 3A and 3B are sectional views cut along line 3A-3A and line 3B-3B of Fig. 2;
Fig. 4 is a plan view illustrating a structure of a second embodiment of the weather strip of a sunroof device;
Fig. 5 is a sectional view cut along line 5-5 of Fig. 4;
Fig. 6 is a sectional view in a corner portion illustrating a structure of the modification example of the weather strip of a sunroof device; and
Figs. 7A and 7B are sectional views in a general portion and the corner portion illustrating a structure of the modification example of the weather strip of a sunroof device.

### DETAILED DESCRIPTION

### First Embodiment

Hereinafter, a first embodiment of a weather strip of a sunroof device will be described. In addition, hereinafter, a forward-and-rearward direction of a vehicle will be referred to as a "forward-and-rearward direction", and an upper side and a lower side of a height direction of the vehicle will be respectively referred to as an "upper side" and "lower side".

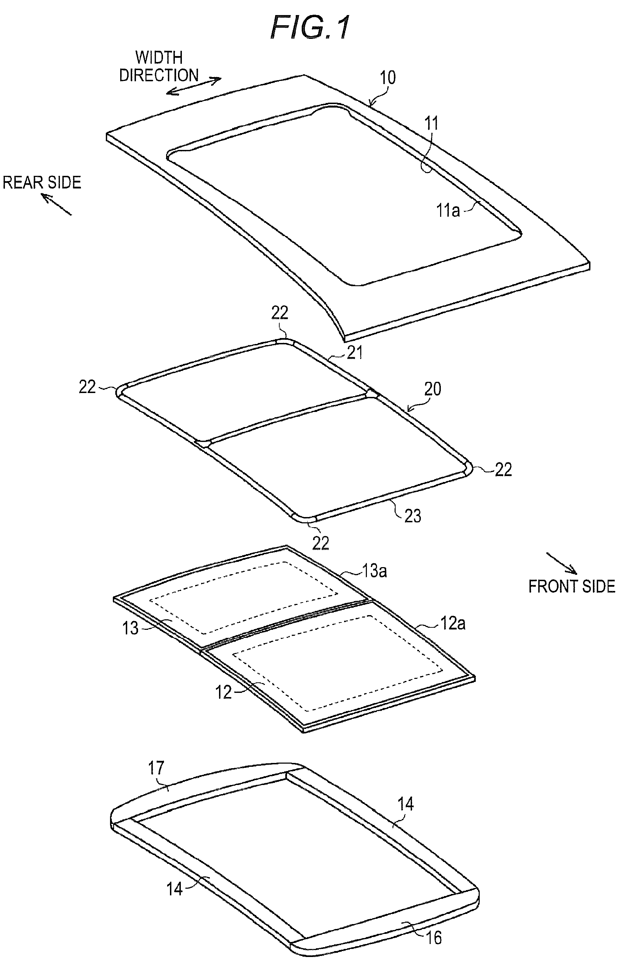

As illustrated in Fig. 1, in a roof 10 of a vehicle, such as a car, a substantially rectangular opening 11 is formed. The opening 11 has a substantially rectangular cylindrical opening end edge 11 a which extends downward across substantially the entire circumference. In addition, in the roof 10, a substantially rectangular movable panel 12 and a fixed panel 13 which are made of, for example, a glass plate, are installed in parallel in the forward-and-rearward direction. The movable panel 12 and the fixed panel 13 configure a roof panel.

The movable panel 12 is attached so that a front portion of the opening 11 is openable and closable. In other words, the movable panel 12 is attached to be capable of performing a tilting-up operation of raising a rear part by using a front part as a fulcrum, and a sliding operation in the forward-and-rearward direction. In an opening/closing operation of the front portion of the opening 11 by the movable panel 12, a so-called outer sliding type in which the sliding operation is performed while maintaining the tilted-up state is employed. In addition, the movable panel 12 has a substantially rectangular cylindrical panel end edge 12a which extends downward across substantially the entire circumference.

Meanwhile, the fixed panel 13 is attached so that a rear portion of the opening 11 is always closed. In addition, the fixed panel 13 has a substantially rectangular cylindrical panel end edge 13a which extends downward across substantially the entire circumference.

In addition, in the roof 10, one pair of guide rails 14 which extend in the forward-and-rearward direction along each of both edge portions of the opening 11 in a width direction of the vehicle, are installed. Furthermore, in the roof 10, a front housing 16 which extends in the width direction of the vehicle along the front edge portion of the opening 11, and connects the front ends of both guide rails 14 to each other, and a rear housing 17 which extends in the width direction of the vehicle along the rear edge portion of the opening 11, and connects the rear ends of both guide rails 14 to each other, are installed. Each guide rail 14 is made of, for example, an extruded material of an aluminum alloy, and both the front housing 16 and the rear housing 17 are made of, for example, a resin material.

In addition, one pair of functional components (not illustrated) are respectively supported to be movable in the forward-and-rearward direction, by both guide rails 14. The movable panel 12 is associated with and supported by both functional components in a state where the functional components are bridged. The movable panel 12 performs the opening/closing operation according to the movement of both functional components in the forward-and-rearward direction.

Furthermore, a weather strip 20 is mounted on the roof 10. The weather strip 20 includes a substantially rectangular annular weather strip main body 21 along a circumferential edge portion of the opening 11. The weather strip main body 21 extends along a boundary portion between the opening 11, and the movable panel 12 and the fixed panel 13 which close the opening 11.

Next, a structure of corner portions 22 at four locations at which the weather strip main body 21 is rotated in the forward-and-rearward direction from the width direction of the vehicle will be described together with a structure of other parts (hereinafter, referred to as a "general portion 23") which extend in a shape of a straight line.

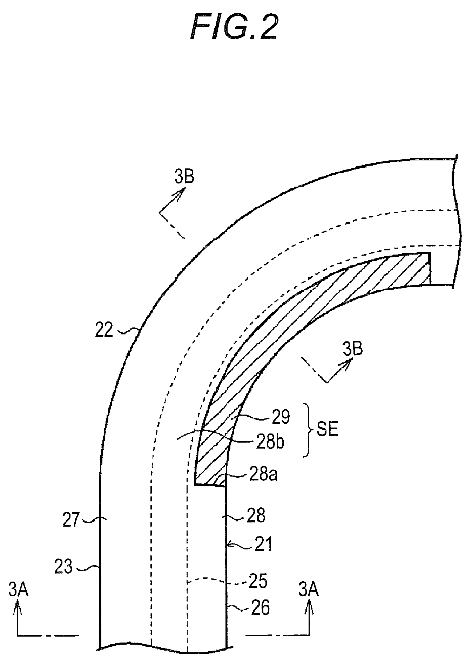

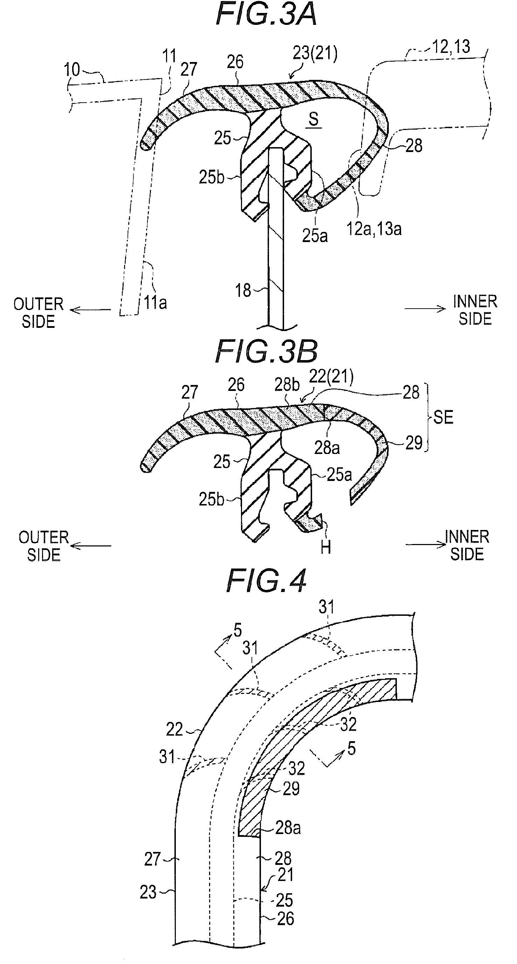

As illustrated in Fig. 2, the weather strip main body 21 includes an attachment portion 25 which extends across the entire circumference along the circumferential edge portion of the opening 11, and is made of a solid material of an extruded material, such as synthetic rubber (EPDM or the like) or thermoplastic elastomer. As illustrated in Figs. 3A and 3B, the attachment portion 25 includes one pair of leg portions 25a and 25b which are respectively disposed on a center side (hereinafter, referred to as an "inner side") and a counter-center side (hereinafter, referred to as an "outer side") of the opening 11, and is formed in a substantial U shape from a sectional view which opens downward. The attachment portion 25 is mounted on the roof 10 in a constantly engaged state where a longitudinal wall 18, which stands in all (roof 10) of both guide rails 14, the front housing 16, and the rear housing 17, is inserted between both leg portions 25a and 25b.

In addition, the weather strip main body 21 includes a sealing portion 26 which is connected to an upper end of the attachment portion 25, and is made of an extruded sponge material of synthetic rubber (EPDM or the like) or thermoplastic elastomer. The sealing portion 26 includes an outer sealing portion 27 which extrudes to the outside toward the opening 11 from the attachment portion 25, and liquid-tightly comes into contact with the opening end edge 11 a thereof. The outer sealing portion 27 is connected to an upper end of the attachment portion 25 so that one end becomes a free end.

In addition, as illustrated in Fig. 3A, the sealing portion 26 in the general portion 23 includes an inner sealing portion 28 which is bent to the inner side toward the movable panel 12 and the fixed panel 13 from the attachment portion 25. Both ends of the inner sealing portion 28 are respectively connected to the upper end of the attachment portion 25 and the leg portion 25a so as to form a space S between the inner sealing portion 28 and the attachment portion 25. The inner sealing portion 28 is formed in a substantially arced shape from a sectional view which becomes convex to the inner side in a free state, and forms a hollow sectional surface in a substantially D shape in collaboration with the attachment portion 25. The inner sealing portion 28 is elastically deformed so that a part thereof overlaps the panel end edges 12a and 13a in a height direction of the vehicle, and liquid-tightly comes into contact with these edges.

Furthermore, as illustrated in Fig. 3B, in the sealing portion 26 in the corner portion 22, a cut portion 28a is formed in a tip end portion of the inner sealing portion 28 across the entire length. In addition, the cut portion 28a is covered by a filling portion 29 which functions as a die molding portion which is made of a sponge material of synthetic rubber (EPDM or the like) or thermoplastic elastomer. The filling portion 29 extends in the continuity of the inner sealing portion, in the cut portion 28a; in other words, the filling portion is formed flush with the inner sealing portion. Therefore, the filling portion 29 collaborates with a non-cut part (hereinafter, referred to as a "remaining portion 28b") of the inner sealing portion 28, forms a synthetic inner sealing portion SE similar to the inner sealing portion 28 in the general portion 23, and forms a substantially D-shaped hollow sectional surface in collaboration with the attachment portion 25. In other words, the synthetic inner sealing portion SE (filling portion 29) liquid-tightly comes into contact with the panel end edges 12a and 13a in a state similar to the inner sealing portion 28 in the general portion 23. In addition, a through hole H is formed below the synthetic inner sealing portion SE. The through hole H is for inserting and removing a mold related to die molding of the filling portion 29 (die molding portion).

As described in detail above, according to the embodiment, the following operational effects can be achieved.
(1) In the embodiment, it is possible to solidly mount the attachment portion 25 which is made of a solid material of an extruded material in a state of being constantly engaged with the roof 10 across the entire circumference along the circumferential edge portion of the opening 11, and to further reduce the number of assembling man-hours of the weather strip main body 21 (weather strip 20). In particular, since the weather strip main body 21 may insert the longitudinal wall 18 between both leg portions 25a and 25b by so-called one-way assembly from above the longitudinal wall 18, it is possible to further reduce the number of assembling man-hours.
(2) In the embodiment, by forming the cut portion 28a at a part in the corner portion 22, the sealing portion 26 (inner sealing portion 28) can further improve followability along the corner portion 22. Meanwhile, by covering the cut portion 28a in accordance with the corner portion 22, the filling portion 29 can appropriately maintain sealing performance in the corner portion 22.
(3) In the embodiment, both ends of the inner sealing portion 28 are connected to the attachment portion 25 so as to form the space S between the inner sealing portion 28 and the attachment portion 25, but the through hole H is formed in the synthetic inner sealing portion SE which is equivalent to the inner sealing portion 28. Therefore, when performing die molding with respect to the filling portion 29, since it is possible to insert and remove the mold by using the through hole H, it is possible to further improve workability. In addition, since the through hole H can be expanded according to elastic deformation of the synthetic inner sealing portion SE, the through hole H may have a smaller opening amount than an external dimension of the mold.
(4) In the embodiment, since it is not necessary to additionally install a fixing member (double-sided tape or the like) for fixing the corner portion 22 of the weather strip main body 21 to the roof 10, and it is possible to fix to the roof 10 by using the attachment portion 25 similar to the general portion 23, and thus, it is possible to reduce costs.
(5) In the embodiment, since the inner sealing portion 28 forms the hollow sectional surface in collaboration with the attachment portion 25, it is possible to further improve sealing performance between the panel end edges 12a and 13a in the general portion 23. Similarly, since the synthetic inner sealing portion SE generally forms the hollow sectional surface in collaboration with the attachment portion 25, it is possible to further improve the sealing performance between the panel end edges 12a and 13a in the corner portion 22.

### Second Embodiment

Hereinafter, a second embodiment of a weather strip of a sunroof device will be described. In addition, for convenience of the description, elements similar to those in the first embodiment will be given the same reference numerals, and the description thereof will be partially omitted.

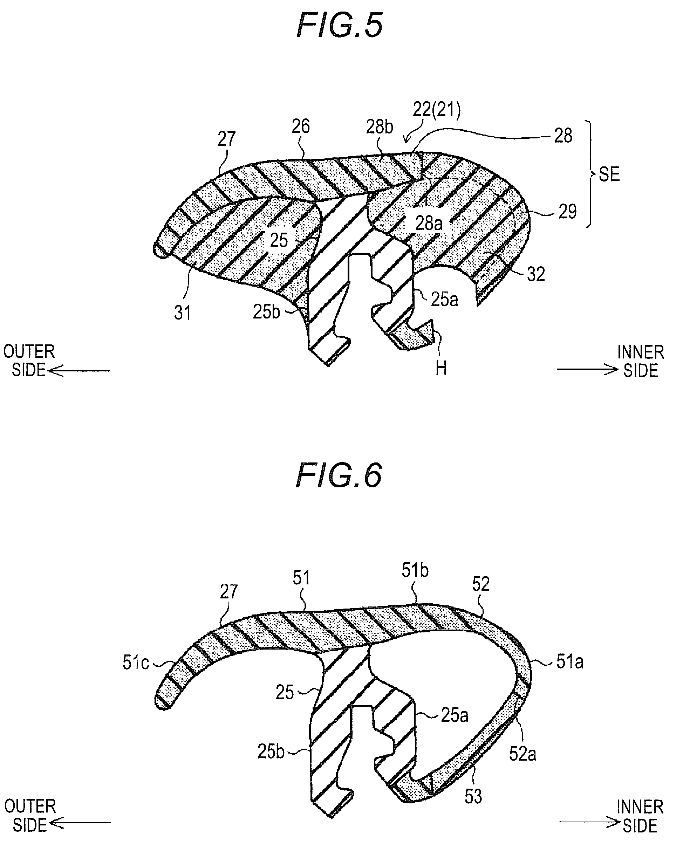

As illustrated in Figs. 4 and 5, in the corner portion 22, the outer sealing portion 27 and the attachment portion 25 are connected to each other by first ribs 31 which are a plurality (three in the embodiment) of ribs made of a sponge material of synthetic rubber (EPDM or the like) or thermoplastic elastomer. The first ribs 31 are installed in parallel in a circumferential direction of the corner portion 22. Each first rib 31 is formed in a shape of a plate connected to a lower surface of the outer sealing portion 27 and an outer surface of the leg portion 25b, and divides corner portions that form the first ribs 31.

In addition, in the corner portion 22, the synthetic inner sealing portion SE (the upper portion of the remaining portion 28b, the filling portion 29) and the attachment portion 25 are connected to each other by second ribs 32 which are a plurality (three in the embodiment) of ribs made of a sponge material of synthetic rubber (EPDM or the like) or thermoplastic elastomer. The second ribs 32 are installed in parallel in the circumferential direction of the corner portion 22. Each second rib 32 is formed in a shape of a plate connected to a lower surface of the synthetic inner sealing portion SE and an inner surface of the leg portion 25a, and divides corner portions that form the second ribs 32.

The die molding portion comprises the first and second ribs 31 and 32 together with the filling portion 29.

As described in detail above, according to the embodiment, the following effects in addition to the effects of the first embodiment can be obtained.
(1) In the embodiment, the die molding portion includes the first ribs 31 which connect the outer sealing portion 27 and the attachment portion 25 to each other. Therefore, even when the outer sealing portion 27 which is positioned further outside than the attachment portion 25 in the corner portion 22 is pulled along the corner portion 22, since the outer sealing portion 27 is reinforced by the first ribs 31, it is possible to further stabilize the posture, and to prevent deterioration of the sealing performance between the outer sealing portion 27 and the opening end edge 11 a.
(2) In the embodiment, the die molding portion includes the second ribs 32 which connect the synthetic inner sealing portion SE (the upper portion of the remaining portion 28b, the filling portion 29) and the attachment portion 25 to each other. Therefore, by further stabilizing the posture of the synthetic inner sealing portion SE, it is possible to more appropriately maintain the sealing performance in the corner portion 22. In addition, even if the synthetic inner sealing portion SE which is positioned further inside the attachment portion 25 is compressed along the corner portion 22, since the synthetic inner sealing portion SE is reinforced by the second ribs 32, it is possible to prevent the generation of wrinkles.
(3) In the embodiment, as the outer sealing portion 27 is connected to the attachment portion 25 so that one end becomes a free end, it is possible to easily dispose the mold for performing die molding with respect to the first ribs 31 on the lower surface thereof.
(4) In the embodiment, when performing die molding with respect to the second ribs 32, since it is possible to insert and remove the mold by using the through hole H, it is possible to further improve workability. In addition, since the through hole H can be expanded according to elastic deformation of the synthetic inner sealing portion SE, the through hole H may have a smaller opening amount than an external dimension of the mold.

In addition, the above-described embodiments may be modified as follows.

In the first embodiment, as illustrated in Fig. 6, in an inner sealing portion 52 which is equivalent to the inner sealing portion 28 that forms a sealing portion 51 together with the outer sealing portion 27, a cut portion 52a may be formed below an inner contact surface 51 a which is in contact with the panel end edges 12a and 13a, in the corner portion 22. In addition, the cut portion 52a may be covered by a filling portion 53 which functions as the die molding portion that is equivalent to the filling portion 29 made of a sponge material of a synthetic rubber (EPDM or the like) or thermoplastic elastomer. In other words, the sealing portion 51 may be formed so that a design surface 51 b which is exposed from between the opening end edge 11 a and the panel end edges 12a and 13a, an outer contact surface 51c which is in contact with the opening end edge 11 a linked to the design surface 51 b, and the inner contact surface 51a, are continuous with each other.

Accordingly, in the sealing portion 51, it is possible to prevent deterioration of the sealing performance between the sealing portion 51 and the opening end edge 11a, and the sealing performance between the sealing portion 51 and the panel end edges 12a and 13a. In addition, in the corner portion, since a boundary line between the sealing portion 51 (cut portion 52a) and the filling portion 53 is not exposed to the design surface 51 b, it is possible to further improve the appearance.

In addition, the inner sealing portion 52 and the attachment portion 25 may be connected to each other by the second ribs (32). In this case, even when the inner sealing portion 52 which is positioned further inside than the attachment portion 25 in the corner portion 22 is compressed along the corner portion 22, since the inner sealing portion 52 is reinforced by the second ribs, it is possible to prevent the generation of wrinkles.

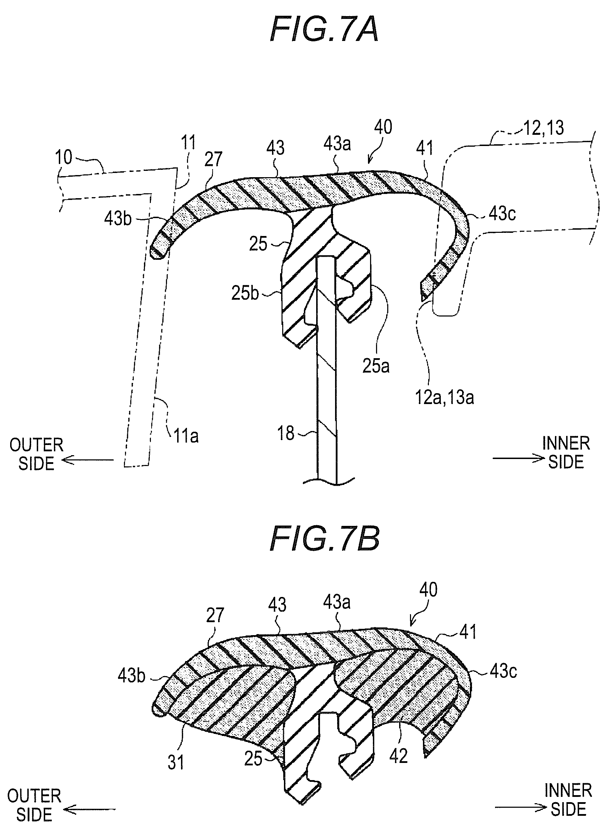

In the above-described second embodiment, as illustrated in Fig. 7A, a weather strip main body 40, which includes an inner sealing portion 41 connected to the upper end of the attachment portion 25 so that one end becomes a free end, may be employed. In addition, as illustrated in Fig. 7B, in the corner portion, the inner sealing portion 41 and the attachment portion 25 may be connected to each other by second ribs 42 which are equivalent to the second ribs 32. In other words, without forming the cut portion or providing the filling portion which covers the cut portion in the inner sealing portion 41, the second ribs 42 may be connected to the lower surface of the inner sealing portion 41 as it is. In this case, even when the inner sealing portion 41 which is positioned further inside than the attachment portion 25 in the corner portion 22 is compressed along the corner portion 22, since the inner sealing portion 41 is reinforced by the second ribs 42, it is possible to prevent the generation of wrinkles. In addition, since the inner sealing portion 41, is connected to the attachment portion 25 so that one end becomes a free end, it is possible to easily dispose the mold for performing die molding with respect to the second ribs 42 on the lower surface of the inner sealing portion 41. In addition, the first ribs 31 may be omitted.

Furthermore, since a sealing portion 43 which comprises the outer sealing portion 27 and the inner sealing portion 41, may have the shape of the extruded material as it is across the entire length, it is possible to reduce the number of manufacturing man-hours. In particular, the sealing portion 43 is formed so that a design surface 43a which is exposed from between the opening end edge 11 a and the panel end edges 12a and 13a, an outer contact surface 43b which is in contact with the opening end edge 11 a linked to the design surface 43a, and an inner contact surface 43c which is in contact with the panel end edges 12a and 13a, are continuous with each other. Accordingly, in the sealing portion 43, it is possible to prevent deterioration of the sealing performance between the opening end edge 11 a and the panel end edges 12a and 13a.

In addition, in the corner portion 22, the sealing portion (43) may be formed so that the cut portion in the inner sealing portion 41 and the filling portion which covers the cut portion are formed and are continuous only to the design surface 43a and the outer contact surface 43b. Even in this modification, it is possible to prevent deterioration of the sealing performance between the sealing portion and the opening end edge 11a. Otherwise, in the corner portion 22, the sealing portion (43) may be configured so that the cut portion in the outer sealing portion 27 and the filling portion which covers the cut portion are formed, and are continuous only with the design surface 43a and the inner contact surface 43c. In this modification, it is possible to prevent deterioration of the sealing performance between the sealing portion and the panel end edges 12a and 13a.

In the above-described second embodiment, the first ribs 31 or the second ribs 32 may be omitted.

In each of the above-described embodiments, in the corner portion 22, the cut portion is formed in the outer sealing portion 27, and the filling portion which functions as the die molding portion that covers the cut portion may be provided. In other words, in the corner portion 22, in collaboration with the non-cut part (remaining portion) of the outer sealing portion 27 and the filling portion, the outer sealing portion similar to the outer sealing portion 27 in the general portion 23 may be formed. In addition, the disposition of the cut portion may be arbitrary, and for example, the cut portion may be positioned below the outer contact surface which is in contact with the opening end edge 11 a. In addition, in the corner portion 22, the cut portion may be the inner sealing portion 28 which has the shape of the extruded material as it is.

In each of the above-described embodiments, in the corner portion 22, the cut portion is formed across substantially the entire sealing portion 26, and the filling portion which functions as the die molding portion that covers the cut portion may be provided. In other words, in the corner portion 22, substantially the entire sealing portion 26 may be removed.

In each of the above-described embodiments, the weather strip 20 is mounted in a state of being engaged with the roof 10 (both guide rails 14 or the like) which inserts the longitudinal wall 18 between both leg portions 25a and 25b. In contrast to this, for example, the weather strip may be mounted in a state of being engaged with the roof 10 which makes the attachment portion be fitted to an appropriate fitting portion that is circumferentially provided on the roof 10 side along the circumferential edge portion of the opening 11. Otherwise, the weather strip may be mounted in a state of being engaged with the roof 10 which makes the attachment portion be inserted to an appropriate insertion portion that is circumferentially provided on the roof 10 side along the circumferential edge portion of the opening 11. In summary, the attachment portion which is mounted in a state of being mechanically engaged with the roof 10 may be provided without additionally providing the fixing member.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the scope of the present invention. Accordingly, it is expressly intended that all such variations, changes and equivalents which fall within the scope of the present invention as defined in the claims, be embraced thereby.

## Claims

1. A weather strip (20) of a sunroof device comprising:
an attachment portion (25) which extends over the entire circumference along a circumferential edge portion of an opening (11) formed in a roof (10) of a vehicle, is made of a solid material, and is mounted on the roof (10) in a state of being engaged with the roof (10);
**characterized in that** a sealing portion (26, 43, 51) made of a sponge material, which protrudes toward the opening (11) from the attachment portion (25), liquid-tightly comes into contact with an opening end edge (11a) of the opening (11), protrudes from the attachment portion (25) toward a roof panel (12, 13) that closes the opening (11), and liquid-tightly comes into contact with a panel end edge (12a, 13a) of the roof panel (12, 13); and
a die molding portion (29, 53) which is disposed in a corner portion (22) and is made of the sponge material.

2. The weather strip (20) of a sunroof device according to claim 1,
wherein, the sealing portion (26, 43, 51) comprises an outer sealing portion (27), which liquid-tightly comes into contact with the opening end edge (11a) and is connected to the attachment portion (25) so that one end of said outer sealing portion (27) is a free end, and
wherein the die molding portion (29, 53) includes a first rib (31) connecting the outer sealing portion (27) and the attachment portion (25).

3. The weather strip (20) of a sunroof device according to claim 1 or 2,
wherein the sealing portion (26, 43, 51) comprises an inner sealing portion (28) that liquid-tightly comes into contact with the panel end edge (12a, 13a), and that the die molding portion (29, 53) includes a second rib (32, 42) connecting the inner sealing portion (28) and the attachment portion (25).

4. The weather strip (20) of a sunroof device according to claim 1,
wherein a cut portion (28a, 52a) is formed at least at a part in the corner portion (22) in the sealing portion (26, 43, 51), and
wherein the die molding portion (29, 53) has a filling portion (29) which covers the cut portion (28a, 52a).

5. The weather strip (20) of a sunroof device according to claim 4,
wherein the sealing portion (26, 43, 51) forms a design surface (43a, 51 b), and at least one of an outer contact surface (43b, 51 c) that is in contact with the opening end edge (11a) linked to the design surface (43a, 51b) and an inner contact surface (43c, 51a) that is in contact with the panel end edge (12a, 13a), in the corner portion (22).

6. The weather strip of a sunroof device according to claim 4 or 5,
wherein the sealing portion (26, 43, 51) comprises an outer sealing portion (27) which liquid-tightly comes into contact with the opening end edge (11a) and an inner sealing portion (28, 41, 52) which liquid-tightly comes into contact with the panel end edge (12a, 13a), and that the die molding portion (29, 53) includes a rib (31, 32) which connects at least one of the filling portion (29), the outer sealing portion (27) and the inner sealing portion (28, 41, 52), to the attachment portion (25).

7. The weather strip (20) of a sunroof device according to claim 6,
wherein both ends of the inner sealing portion (28, 41, 52) are connected to the attachment portion (25) so as to form a space (S) between the inner sealing portion (28, 41, 52) and the attachment portion (25),
wherein the cut portion (28a, 52a) is formed in the inner sealing portion (28, 41, 52), wherein the rib (32) connects at least the filling portion (29) and the attachment portion (25) to each other, and
wherein, in the corner portion (22), a through hole (H) is formed in a synthetic inner sealing portion (SE) which is formed in collaboration with a remaining non-cut portion (28b) of the inner sealing portion (28, 41, 52) and the filling portion (29).

8. The weather strip (20) of a sunroof device according to claim 1,
wherein, the sealing portion (26, 43, 51) comprises an inner sealing portion (28, 41, 52), which liquid-tightly comes into contact with the panel end edge (12a, 13a) and is connected to the attachment portion (25) so that one end of said inner sealing portion (28, 41, 52) is a free end, and
wherein the die molding portion (29, 53) includes a second rib (32) connecting the inner sealing portion (28, 41, 52) and the attachment portion (25).
